# FASCICULE DE BREVET EUROPEEN

(11) **EP 4 198 650 B1**
(45) Date de publication et mention de la délivrance du brevet: **10.09.2025**
(21) Numéro de dépôt: 21215634.3
(22) Date de dépôt: 17.12.2021
(51) Int. Cl.: G04G 21/08, G04R 60/08, G04R 60/10

(54) **MONTRE COMPRENANT UN RÉHAUT POURVU D'UN CIRCUIT DE COMMANDE TACTILE**
ARMBANDUHR MIT EINEM REHAUT, DER MIT EINER BERÜHRUNGSEMPFINDLICHEN STEUERSCHALTUNG VERSEHEN IST
WATCH COMPRISING A FLANGE PROVIDED WITH A TOUCH CONTROL CIRCUIT

(43) Date de publication de la demande: 21.06.2023
(73) Titulaire: ETA SA Manufacture Horlogère Suisse, 2540 Grenchen (CH)
(72) Inventeur: STEHLIN, Xavier, 1588 Cudrefin (CH)
(74) Mandataire: ICB SA

(56) Documents cités:
- WO-A1-2019/135856
- US-A1- 2011 298 670
- US-A1- 2018 088 724

## Description

### Domaine technique de l'invention

L'invention concerne une montre comprenant un réhaut pourvu d'un circuit de commande tactile, ladite montre comportant un circuit d'antenne d'un module de communication de ladite montre.

### Arrière-plan technologique

On connait dans l'état de la technique de nombreux objets électroniques portables susceptibles de se connecter à des réseaux de communication tels que des montres électroniques qui sont pourvus d'interfaces tactiles classiquement agencées dans les glaces de ces dernières. De telles interfaces tactiles sont utilisées généralement pour améliorer l'interactivité des montres et en simplifier les manipulations en particulier lorsque ces dernières proposent un nombre conséquent de menus et de fonctions.

Afin de pouvoir se connecter à des réseaux de communications tels que des réseaux de type Bluetooth ou encore en lien avec la géolocalisation, de telles montres électroniques comprennent des moyens de communication intégrant classiquement une antenne. Il est connu que la taille optimale d'une telle antenne dépend directement de la longueur d'onde du signal émis/reçu. En effet, une antenne de longueur optimale permet d'envoyer/recevoir un signal en entier et à pleine puissance.

Dans ces montres, l'espace disponible étant limité, une antenne doit disposer d'un design adapté pour s'intégrer dans le boitier de la montre. Et si la montre intègre un moyen de communication radio qui fonctionne sur des fréquences radio (telles que le 2.4 GHz ou 1.5 GHz), la taille du produit devient critique par rapport à la longueur d'onde (120 mm et 200 mm).

Par ailleurs, d'autres contraintes doivent également être prises en compte du fait que ces montres comportent beaucoup de parties métalliques et qu'une antenne doit en être isolée. Le document US 2018/088724 A1 divulgue une montre électronique comprenant un boitier pourvu d'une lunette formant en tout ou partie une interface tactile de ladite montre, ladite lunette comprenant un circuit d'antenne d'un module de communication de la montre, la montre étant pourvu d'un circuit de commande tactile d'un organe de commande tactile de cette montre.

Dans ce contexte, on comprend qu'il existe un besoin de trouver une solution, notamment qui ne présente pas les inconvénients de l'art antérieur.

### Résumé de l'invention

Un des buts de l'invention est de disposer d'une montre comprenant une interface tactile et intégrant un circuit d'antenne ayant une longueur optimale pour envoyer/recevoir un signal en entier et à pleine puissance et venant s'intégrer dans le boitier de cette montre dont le volume d'accueil est limité.

Un autre but de l'invention est d'obtenir une montre dont l'esthétisme, la consommation énergétique et les coûts de fabrication ne soient pas impactés ou peu impactés par l'intégration d'une interface tactile dans un réhaut de cette montre en particulier d'un circuit d'antenne.

Un autre but de l'invention est d'obtenir une montre dont l'esthétisme, la consommation énergétique et les coûts de fabrication ne soient pas impactés ou peu impactés par l'intégration d'un circuit de commande tactile et d'un circuit d'antenne dans un réhaut de cette montre.

Dans ce dessein, l'invention concerne une montre électronique selon la revendication 1.

Dans d'autres modes de réalisation :
- la lunette comprend des première et deuxième parties susceptibles d'être assemblées l'une avec l'autre ;
- la lunette comprend une première partie qui est apte à circonscrire une glace de la montre ;
- la lunette comprend une deuxième partie qui est apte à circonscrire un cadran de la montre ;
- la première partie de la lunette comprend un corps comprenant une face externe de la lunette pourvue d'au moins une zone tactile ;
- la deuxième partie de la lunette comprend un élément de support pourvu d'une surface supérieure comportant au moins un relief dont le sommet est couvert d'un matériau conducteur formant une électrode, ledit sommet étant situé en regard d'une portion d'une face interne du corps de la première partie de la lunette agencée en-dessous d'une première ou d'une deuxième zone tactile d'une face externe de cette première partie constituant une face extérieure de la lunette ;
- le circuit d'antenne est réalisé sur une surface supérieure d'un élément de support ou sur une face interne du corps de la première partie de la lunette ;
- le circuit de commande tactile comprenant au moins une électrode est réalisé sur une deuxième portion de la surface supérieure d'un élément de support d'une deuxième partie de la lunette ;
- le circuit de commande comprend un microcontrôleur connecté à ladite au moins une électrode par l'intermédiaire d'au moins une piste de connexion ;
- la lunette est fabriquée en au moins un matériau diélectrique et/ou électriquement non conducteur ;
- la montre est une montre connectée comprenant une lunette qui est une lunette formant en tout ou partie une interface tactile.

### Brève description des figures

D'autres caractéristiques et avantages de la présente invention ressortiront plus clairement de la description détaillée qui suit, faite en liaison avec les figures annexées listées ci-dessous :
- la figure 1 est une représentation schématique d'une montre électronique comprenant une lunette formant en tout ou partie une interface tactile de ladite montre, selon un mode de réalisation de l'invention ;
- la figure 2 est une représentation de la lunette comprenant une deuxième partie dont un élément de support comporte sur sa surface supérieure un circuit de commande tactile pourvu notamment d'électrodes, selon le mode de réalisation de l'invention ;
- la figure 3 est une vue à plus grand échelle d'une partie E de la figure 2, selon le mode de réalisation de l'invention ;
- la figure 4 est une représentation schématique de la disposition des électrodes du circuit de commande tactile et du circuit d'antenne de ladite montre sur la surface supérieure de l'élément de support de la deuxième partie de la lunette participant à former un réhaut de cette lunette, selon le mode de réalisation de l'invention ;
- la figure 5 est une représentation schématique de la montre comprenant un module de communication et un organe de commande tactile dont respectivement le circuit d'antenne et le circuit de commande tactile sont agencés sur la surface supérieure de l'élément de support, selon le mode de réalisation de l'invention, et
- la figure 6 représente la lunette de la montre électronique laissant voir par transparence le circuit d'antenne et le circuit de commande tactile, selon le mode de réalisation de l'invention.

### Description détaillée de l'invention

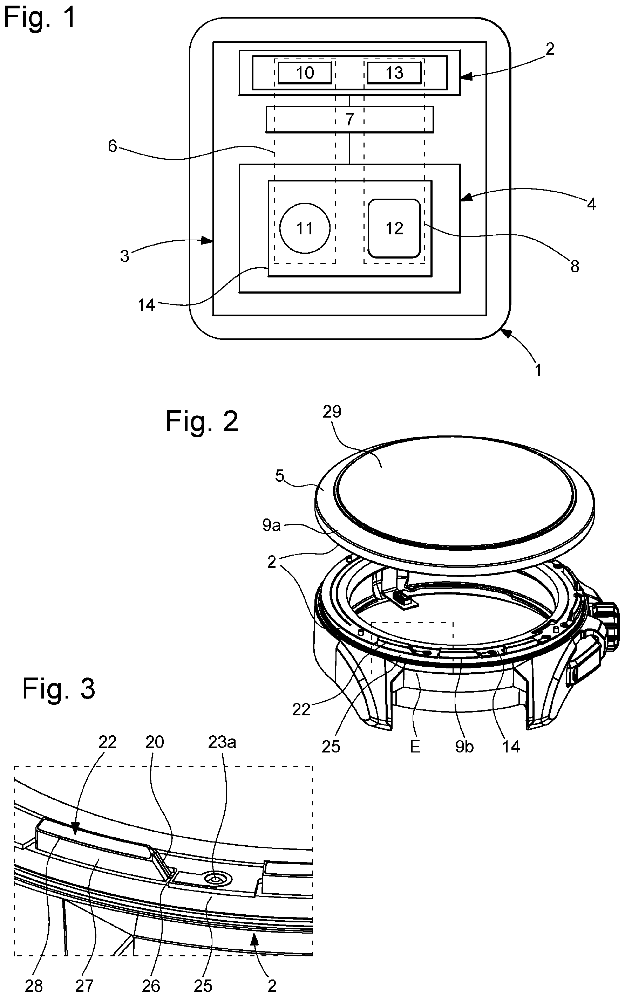

En référence à la figure 1, l'invention porte sur un montre électronique 1 telle qu'une montre connectée.

Dans ce contexte, une telle montre électronique 1 est pourvue d'un boitier 3 comportant une lunette 2 formant en tout ou partie une interface tactile de ladite montre électronique 1 par l'intermédiaire de laquelle un porteur de cette montre 1 peut interagir avec cette dernière dans l'optique de contrôler par exemple des fonctions horlogères de cette montre 1. Ce boitier 3 comporte également une carrure qui peut être réalisée en métal (par ex. en acier, de préférence inoxydable), en un matériau synthétique (par ex. dans un matériau composite comprenant une matrice polymère chargée de fibres, typiquement de carbone) ou en céramique ou encore en au moins un matériau diélectrique et/ou électriquement non conducteur. Le boitier 3 comprend aussi un fond et une glace 29 qui participent à former avec la carrure, une enceinte de ce boitier 3.

Dans une telle enceinte, sont agencés notamment un cadran 7 comprenant un dispositif d'affichage, et un dispositif électronique 4 de ladite montre électronique 1. Le dispositif d'affichage comporte des éléments d'affichage pouvant être analogiques comme des aiguilles et/ou digitales comme un écran LCD, LED ou encore OLED. Le dispositif d'affichage et le cadran 7 sont localisés entre la glace 29 et le dispositif électronique 4.

Dans cette configuration, la lunette 2 comprend des première et deuxième parties 9a, 9b susceptibles d'être assemblées l'une avec l'autre. Dans cette lunette 2 la première partie 9a enserre la glace 29. Autrement dit, cette première partie 9a est apte à circonscrire la glace 29 de la montre 1 en étant en contact voire en couvrant un bord de cette glace. S'agissant de la deuxième partie 9b, elle est quant à elle apte à circonscrire le cadran 7 de cette montre 1 en étant là aussi susceptible d'être en contact voire de couvrir bord de ce cadran 7. Cette lunette 2 comprend également un espaceur ou rehaut qui est agencé entre la glace 29 et ce cadran 7. En effet, ce réhaut est formé par la portion de la lunette 2 qui partant du cran de la glace 29 recouvre le bord du cadran. Un tel réhaut est à la fois compris dans les première et deuxième parties 9a, 9b de cette lunette 2.

Dans cette montre 1, le dispositif électronique 4 comprend un mouvement horloger électronique. Il est configuré pour fournir au moins une information devant être affichée par le dispositif d'affichage du cadran 7. Ce dispositif électronique 4 comporte de manière non exhaustive et non limitative un module de communication 6, un module de contrôle de la montre électronique, un accumulateur d'énergie électrique notamment une batterie ainsi que différents capteurs comme par exemple des capteurs participant à la détermination d'une géolocalisation, d'une altitude ou d'une température d'un lieu ou encore dans la détermination de paramètres physiologiques, biométriques, vitaux et/ou comportementaux du porteur de la montre électronique 1.

On notera que dans cette configuration, le module de contrôle permet au porteur d'une telle montre électronique 1 de pouvoir interagir avec cette dernière notamment en pouvant activer/désactiver/sélectionner différentes fonctions - par exemple des fonctions horlogères - susceptibles d'être mises en œuvre par cette montre électronique 1. Ce module de contrôle comprend un organe de commande tactile 8 et dans des alternatives d'autres organes de commande tels que des poussoirs ou des boutons agencés sur la carrure.

Dans le dispositif électronique 4, le module de communication 6 comprend un circuit d'antenne 10 connecté à un microcircuit 11, et l'organe de commande tactile 8 comprend un microcontrôleur 12 connecté à un circuit de commande tactile 13. Ainsi que nous le verrons par la suite, le circuit d'antenne 10 et le circuit de commande 13 sont agencés sur le réhaut de lunette 2, cette dernière formant en tout ou partie une interface tactile de la montre électronique 1.

Une telle lunette 2 est de préférence agencée sur la carrure du boitier 3. **Il** peut s'agir d'une lunette tournante ou d'une lunette fixe. Ainsi que nous l'avons précédemment évoqué, cette lunette 2 est formée par l'assemblage de ses premières et deuxièmes parties 9a, 9b entre elles. Ces deux parties 9a 9b sont reliées entre elles de manière réversible et/ou étanche.

La première partie 9a de la lunette 2 comprend un corps 5 pourvu d'une face interne et d'une face externe 17 qui forme une face extérieure 17 de la lunette 2. La face extérieure 17 est une face visible de cette lunette 2 par le porteur qui peut être manipulée notamment au niveau de première et deuxième zones tactiles 18a, 18b définies sur cette face 17. La lunette 2 peut comprendre sur sa face extérieure 17 une graduation. Dans l'exemple illustré, la graduation comprend des index figuratifs 24 qui se présentent sous la forme de chiffres (de préférence arabes).

Afin que le circuit d'antenne 10 et le circuit de commande 13 fonctionnent de manière efficace et/ou optimale, le corps 5 de la première partie 9a de cette lunette 2 est réalisé en au moins un matériau diélectrique et/ou électriquement non conducteur. Ledit au moins un matériau permet de contribuer à la réalisation de l'effet capacitif de l'organe de commande tactile 8. Ce matériau participe aussi à ne pas détériorer le rayonnement du circuit d'antenne 10, d'agrandir sa longueur électrique et d'améliorer son rendement par rapport à sa taille physique. Un tel matériau peut être par exemple un polymère, du titane ou une céramique, ou tout autre matériau de synthèse. On notera qu'il est possible que le corps 5 de cette première partie 9a ne soit pas réalisé en entier dans ce type de matériau mais que seules des portions de ce corps 5 comprenant des première et deuxième zones tactiles 18a, 18b de la face extérieure 17 de lunette 2 soient réalisées en ce matériau.

La deuxième partie 9b la lunette 2 comprend un élément de support 25 pourvu d'une surface supérieure 26 comportant au moins un relief 27 dont le sommet 28 est couvert/revêtu d'une couche d'un matériau conducteur formant une électrode 22. Un tel sommet 28 est situé en regard voire au contact d'une portion de la face interne de la première partie 9a de la lunette 2 agencée en-dessous de la première ou de la deuxième zone tactile 18a, 18b de la face externe 17 de cette première partie 9a constituant la face extérieure 17 de la lunette 2.

Dans cette configuration, l'élément de support 25 est une pièce en thermoplastique. Plus précisément, cet élément de support 25 est une pièce moulée par injection à partir d'une technologie dite MID acronyme de « Molded Inth connection Devices », comprenant sur sa surface supérieure 26 au moins une électrode 22. On notera qu'un tel élément de support 25 se distingue des matériaux de substrat conventionnels par de meilleures propriétés mécaniques, thermiques, chimiques, électriques et environnementales.

De manière alternative, cet élément de support 25 peut être un substrat comprenant une surface supérieure 26 pourvue d'au moins un relief 27 dont le sommet 28 est couvert/revêtu de la couche d'un matériau conducteur et ce, à partir d'une technologie de dépôt physique en phase vapeur d'un matériau conducteur ou d'une technologie d'impression sélective à une échelle micrométrique de ce matériau conducteur. Des technologies de sérigraphie par de l'argent sur un substrat en polyester ou par du cuivre sur un substrat en polyimide est aussi envisageable.

L'élément de support 25 de cette deuxième partie 9b de cette lunette 2 peut comprendre des aménagements visant à donner accès à un circuit imprimé 14 du dispositif électronique 4 comportant le microcontrôleur 12 de l'organe de commande 8 et le microcircuit 11 du module de communication 6. De tels aménagements offrent ainsi la possibilité de constituer un passage ou à définir un emplacement dans cet élément de support 25 afin de faciliter la connexion du circuit de commande 13, en particulier des électrodes 22, et du circuit d'antenne 10 respectivement au microcontrôleur 12 de l'organe de commande 8 et au microcircuit 11 du module de communication 6.

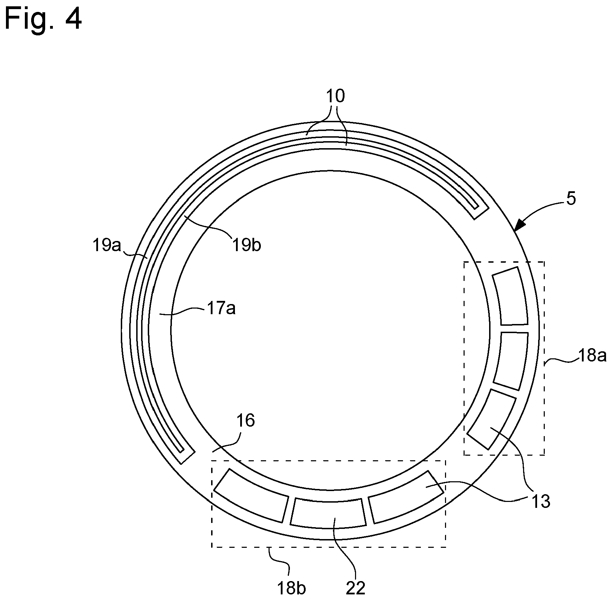

En référence aux figures 2 à 5, l'organe de commande 8 comprend le microcontrôleur 12 qui est connecté au circuit de commande tactile 13. Ainsi que nous l'avons évoqué, un tel circuit de commande tactile 13 comprend au moins une couche en matériau conducteur comprise sur le sommet 28 d'un relief 27 formant une électrode 22, le relief 27 étant localisé sous une des première et deuxième zones tactiles 18a, 18b de la face externe 17 du corps 5 de la première partie 9a de la lunette 2. Autrement dit chaque électrode 22 est formée par la couche en matériau conducteur ou se présente sous la forme d'une telle couche. Une telle électrode 22 possède une forme circulaire ou parallélépipédique voir triangulaire.

Cette électrode 22 est reliée à une borne de connexion 23a définie sur le circuit imprimé 14 du dispositif électronique 4, cette borne 23a étant reliée/connectée au microcontrôleur 12 de l'organe de commande 8. Dans cette configuration, le circuit de commande 13 comprend un élément de liaison électrique 20 susceptible de réaliser la connexion entre chaque électrode 22 et le microcontrôleur 12. Cet élément de liaison 20 est apte à coopérer avec au moins une piste électrique 15b du circuit imprimé 14 du dispositif électronique 4 comprenant le microcontrôleur 12. De cette manière, chaque électrode 22 est ainsi connectée au microcontrôleur 12 à partir de cet élément de liaison 20 et de ladite au moins une piste électrique 15b. On remarquera enfin que le circuit de commande tactile 13 comprend de préférence autant d'éléments de liaison 20 que l'élément de support 25 comprend d'électrodes 22.

En référence aux figures 2 et 4 à 6, l'organe de commande tactile 8 comprend six électrodes 22 réparties sur la surface supérieure 26 de l'élément de support 25. Plus précisément, ces électrodes 22 sont comprises sur cette surface 26 de manière à définir/former les deux zones tactiles 18a, 18b distinctes sur la face extérieure 17 de cette lunette 2, ces deux zones tactiles 18a, 18b formant ainsi l'interface tactile de la montre électronique 1. Dans cette configuration, la surface supérieure 26 de l'élément de support 25 comprend plusieurs électrodes 22 par zone tactile 18a, 18b. La première zone tactile 18a comprend trois électrodes 22 agencées respectivement sous les index 24 deux, trois et quatre définis sur la face extérieure 17 de la lunette 2. La deuxième zone tactile 18b comprend également trois électrodes 22 agencées respectivement sous les index 24 cinq, six et sept définis sur cette face extérieure 17 de la lunette 2.

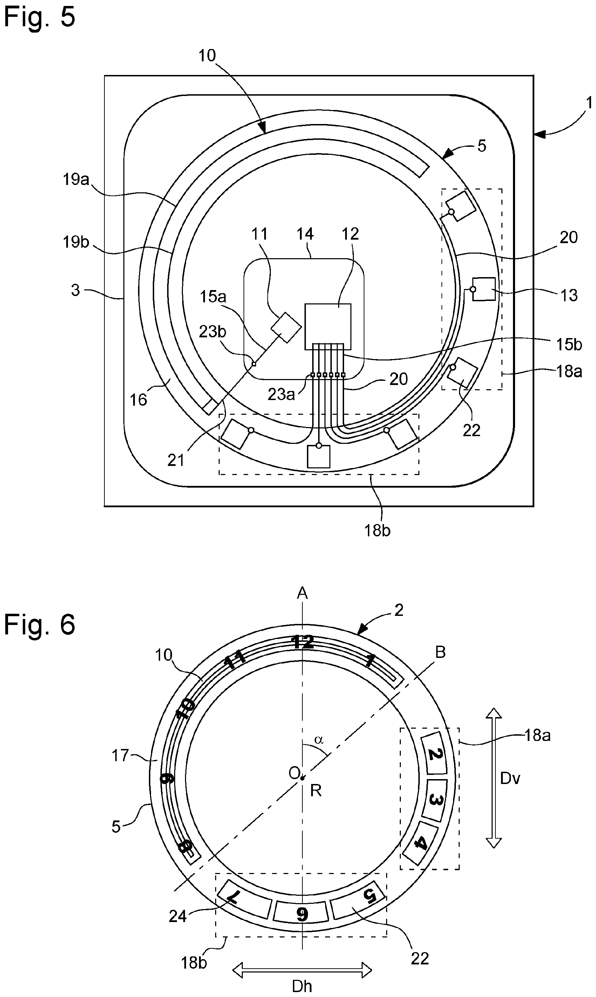

Dans cette configuration, la première zone tactile 18a permet au porteur de la montre 1 d'interagir avec cette dernière en effectuant un déplacement en particulier un « déplacement vertical » (référencé Dv sur la figure 6) d'un accessoire tel qu'un stylet ou encore d'une extrémité d'un de ses membres comme un doigt sur cette première zone 18a. S'agissant de la deuxième zone tactile 18b, elle permet au porteur de la montre 1 d'interagir avec cette dernière en effectuant un déplacement en particulier un « déplacement horizontal » (référencé Dh sur la figure 6) d'un tel accessoire ou encore de l'extrémité d'un de ses membres sur cette zone 18b. Le déplacement vertical décrit une trajectoire qui est sensiblement parallèle ou parallèle à un axe de symétrie A de la lunette 2 passant par le centre O de cette lunette 2 et cette trajectoire étant aussi sensiblement perpendiculaire ou perpendiculaire à un axe de révolution R de cette lunette 2. S'agissant du déplacement horizontal, il décrit une trajectoire qui est quant à elle sensiblement perpendiculaire ou perpendiculaire à cet axe A (ou à la trajectoire décrite par le déplacement vertical) et aussi à l'axe de révolution R de cette lunette 2. Un tel axe A sépare la lunette 2 en deux parties/portions égales en reliant les index 24 douze et six présents sur la face externe 17 de cette lunette 2.

Dans le dispositif électronique 4, le module de communication 6 est apte à permettre la connexion de le montre électronique 1 à un réseau de communication de type Bluetooth. Autrement dit le module de communication 6 est configuré pour communiquer selon un protocole de type Bluetooth. De manière alternative, ce module de communication 6 peut être apte à permettre la connexion de la montre 1 à un réseau de localisation par satellite GNSS (Geolocation and Navigation Satellite System), tel que par exemple le GPS (Global Positioning System), Glonass ou Galileo. Ce module de communication 6 comprend le circuit d'antenne 10 connecté au microcircuit 11.

Dans le présent mode de réalisation, un tel circuit d'antenne 10 est compris sur la surface supérieure 26 de l'élément de support 25 de la lunette 2. Ce circuit d'antenne 10 comprend des premier et deuxième brins 19a, 19b présentant chacun une extrémité proximale et une extrémité distale, et s'étendant en parallèle entre leurs extrémités proximales et distales. Dans ce circuit d'antenne 10, l'architecture à deux brins en parallèle permet d'élargir la bande de fréquence (100MHz), nécessaire par exemple pour communiquer sur un réseau de communication de type Bluetooth (2.4 GHz). Dans ce circuit d'antenne 10, les premier et deuxième brins 19a, 19b sont connectés en leurs extrémités distales ainsi qu'au niveau de leurs extrémités proximales.

Dans cette configuration, le circuit d'antenne 10 s'étend essentiellement selon une trajectoire en arc de cercle en comportant deux brins 19a, 19b agencés en parallèle sur la surface supérieure 26 qui suit cette trajectoire. Ce circuit d'antenne 10 comprend également un élément de liaison électrique 21 relié à une borne de connexion 23b définie sur le circuit imprimé 14 du dispositif électronique 4, cette borne 23b étant connectée aux extrémités proximales ou distales des brins 19a, 19b. Cet élément de liaison électrique 21 est apte à coopérer avec au moins une piste électrique 15a du circuit imprimé 14 du dispositif électronique 4 comprenant le microcircuit 11 du module de communication 6. De cette manière, le circuit d'antenne 10 est connecté à ce microcircuit 11 à partir de ce dit élément de liaison électrique 21 et de ladite au moins une piste électrique 15a.

Dans cette montre 1, le circuit d'antenne 10 et le circuit de commande tactile 13 sont localisés dans la lunette 2 de part et d'autre d'un axe de symétrie B passant par le centre O de la lunette 2 et qui est sensiblement perpendiculaire ou perpendiculaire à l'axe de révolution R de cette lunette 2. Cet axe référencé B sépare la lunette 2 ou ses première et deuxième parties 9a, 9b, ou la surface supérieure 26 en deux parties/portions et forme un angle α avec l'axe A qui est compris entre 30 et 40 degrés et qui est de préférence de 36 degrés. Ainsi le circuit d'antenne 10 et le circuit de commande tactile 13 sont en tout ou partie réalisés sur des portions distinctes de la surface 26 de l'élément de support 25 ou de la lunette 2 ou des première et deuxième parties 9a, 9b.

Ces deux portions sont séparées par l'axe de symétrie B. Plus précisément, la surface supérieure 26 de l'élément de support 25 de la deuxième partie 9a de la lunette 2 comprend donc deux portions. La première portion comprend un relief dont le sommet comporte les premier et deuxième brins 19a, 19b de ce circuit d'antenne 10. La deuxième portion comprend quant à elle les reliefs 27 formant les électrodes 22.

On notera en outre que l'élément de support 25 comprenant à la fois le circuit de commande 13 et le circuit d'antenne 10 peut être réalisé à partir de la technologie dite MID déjà évoquée. Lorsque l'élément de support 25 est un substrat pourvu de reliefs, le circuit d'antenne et le circuit de commande tactile peuvent être réalisés à partir de la technologie de dépôt physique en phase vapeur d'un matériau conducteur ou de la technologie d'impression sélective à une échelle micrométrique de ce matériau conducteur. Des technologies de sérigraphie par de l'argent sur une surface supérieure 26 en polyester ou par du cuivre sur une surface supérieure 26 en polyimide est aussi envisageable.

En outre, on notera que dans une variante, le circuit de commande tactile 13 est compris sur l'élément de support 25 de la deuxième partie 9b de la lunette 2 et le circuit d'antenne sur la face interne de la lunette 2. La réalisation de ce circuit d'antenne 10 sur cette face interne peut être effectuée à partir de la technologie de dépôt physique en phase vapeur d'un matériau conducteur ou de la technologie d'impression sélective à une échelle micrométrique de ce matériau conducteur comprenant une encre conductrice, évoqué précédemment.

## Revendications

1. Montre électronique (1) comprenant un boitier pourvu d'une lunette (2) formant en tout ou partie une interface tactile de ladite montre (1), ladite lunette (2) comprenant un circuit d'antenne (10) d'un module de communication (6) de la montre (1) et un réhaut agencé entre une glace (29) et un cadran (7) de la montre (1), le réhaut étant pourvu d'un circuit de commande tactile (13) d'un organe de commande tactile (8) de cette montre (1), ledit circuit d'antenne (10) et le circuit de commande tactile (13) étant localisés dans la lunette (2) de part et d'autre d'un axe de symétrie (B) passant par le centre (O) de la lunette (2), un tel circuit d'antenne (10) comprenant des premier et deuxième brins (19a, 19b) réalisés sur une première portion de la surface supérieure (26) d'un élément de support (25) d'une deuxième partie (9a) de la lunette (2), lesdits premier et deuxième brins (19a, 19b) présentant chacun une extrémité proximale et une extrémité distale, et s'étendant en parallèle entre leurs extrémités proximales et distales, les premier et deuxième brins (19a, 19b) étant connectés par leurs extrémités distales ainsi qu'au niveau de leurs extrémités proximales, ce circuit d'antenne (10) comprenant un microcircuit (11) connecté aux premier et deuxième brins (19a, 19b) par l'intermédiaire d'une piste de connexion (21) réalisée sur la surface supérieure (26) d'un élément de support (25) d'une deuxième partie (9a) de la lunette (2).

2. Montre électronique (1) selon la revendication précédente, **caractérisée en ce que** la lunette (2) comprend des première et deuxième parties (9a, 9b) susceptibles d'être assemblées l'une avec l'autre.

3. Montre électronique (1) selon l'une quelconque des revendications précédentes, **caractérisée en ce que** la lunette (2) comprend une première partie (9a) qui est apte à circonscrire une glace (29) de la montre (1).

4. Montre électronique (1) selon l'une quelconque des revendications précédentes, **caractérisée en ce que** la lunette (2) comprend une deuxième partie (9b) qui est apte à circonscrire un cadran de la montre (1).

5. Montre électronique (1) selon l'une quelconque des revendications précédentes, **caractérisée en ce que** la première partie (9a) de la lunette (2) comprend un corps (5) comprenant une face externe (17) de la lunette (2) pourvue d'au moins une zone tactile (18a, 18b).

6. Montre électronique (1) selon l'une quelconque des revendications précédentes, **caractérisée en ce que** la deuxième partie (9b) de la lunette (2) comprend un élément de support (25) pourvu d'une surface supérieure (26) comportant au moins un relief (27) dont le sommet (28) est couvert d'un matériau conducteur formant une électrode (22), ledit sommet (28) étant situé en regard d'une portion d'une face interne du corps (5) de la première partie (9a) de la lunette (2) agencée en-dessous d'une première ou d'une deuxième zone tactile (18a, 18b) d'une face externe (17) de cette première partie (9a) constituant une face extérieure de la lunette (2).

7. Montre électronique (1) selon l'une quelconque des revendications précédentes, **caractérisée en ce que** le circuit d'antenne (10) est réalisé sur une surface supérieure (26) d'un élément de support (25) ou sur une face interne du corps (5) de la première partie (9a) de la lunette (2).

8. Montre électronique (1) selon l'une quelconque des revendications précédentes, **caractérisée en ce que** le circuit de commande tactile (13) comprenant au moins une électrode (22) est réalisé sur une deuxième portion de la surface supérieure (26) d'un élément de support (25) d'une deuxième partie (9a) de la lunette (2).

9. Montre électronique (1) selon l'une quelconque des revendications précédentes, **caractérisée en ce que** le circuit de commande (13) comprend un microcontrôleur (12) connecté à ladite au moins une électrode (22) par l'intermédiaire d'au moins une piste de connexion (20).

10. Montre électronique (1) selon l'une quelconque des revendications précédentes, **caractérisée en ce que** la lunette (2) est fabriquée en au moins un matériau diélectrique et/ou électriquement non conducteur.

11. Montre électronique (1) selon l'une quelconque des revendications précédentes, **caractérisée en ce qu'**elle est une montre (1) notamment une montre connectée comprenant une lunette (2) qui est une lunette formant en tout ou partie une interface tactile.

## Patentansprüche

1. Elektronische Uhr (1), umfassend ein Gehäuse mit einer Lünette (2), die ganz oder teilweise eine berührungsempfindliche Schnittstelle der genannten Uhr (1) bildet, wobei die genannte Lünette (2) einen Antennenschaltkreis (10) eines Kommunikationsmoduls (6) der Uhr (1) sowie einen Rehaut aufweist, der zwischen einem Uhrglas (29) und einem Zifferblatt (7) der Uhr (1) angeordnet ist, wobei der Rehaut mit einer taktilen Steuerschaltung (13) eines berührungsempfindlichen Bedienelements (8) dieser Uhr versehen ist, wobei der genannte Antennenschaltkreis (10) und die taktile Steuerschaltung (13) in der Lünette (2) auf beiden Seiten einer Symmetrieachse (B) angeordnet sind, die durch das Zentrum (O) der Lünette (2) verläuft, wobei der Antennenschaltkreis (10) einen ersten und einen zweiten Leiter (19a, 19b) umfasst, die auf einem ersten Abschnitt der oberen Fläche (26) eines Trägerelements (25) eines zweiten Teils (9a) der Lünette (2) ausgebildet sind, wobei die genannten ersten und zweiten Leiter (19a, 19b) jeweils ein proximales und ein distales Ende aufweisen und sich zwischen ihren proximalen und distalen Enden parallel erstrecken, wobei die ersten und zweiten Leiter (19a, 19b) sowohl an ihren distalen als auch an ihren proximalen Enden miteinander verbunden sind, wobei der Antennenschaltkreis (10) einen Mikroschaltkreis (11) umfasst, der über eine auf der oberen Fläche (26) des Trägerelements (25) des zweiten Teils (9a) der Lünette (2) ausgebildete Leiterbahn (21) mit den ersten und zweiten Leitern (19a, 19b) verbunden ist.

2. Elektronische Uhr (1) nach dem vorhergehenden Anspruch, **dadurch gekennzeichnet, dass** die Lünette (2) einen ersten und einen zweiten Teil (9a, 9b) umfasst, die miteinander verbindbar sind.

3. Elektronische Uhr (1) nach einem der vorhergehenden Ansprüche, **dadurch gekennzeichnet, dass** die Lünette (2) einen ersten Teil (9a) umfasst, der geeignet ist, ein Uhrglas (29) der Uhr (1) zu umschließen.

4. Elektronische Uhr (1) nach einem der vorhergehenden Ansprüche, **dadurch gekennzeichnet, dass** die Lünette (2) einen zweiten Teil (9b) umfasst, der geeignet ist, ein Zifferblatt der Uhr (1) zu umschließen.

5. Elektronische Uhr (1) nach einem der vorhergehenden Ansprüche, **dadurch gekennzeichnet, dass** der erste Teil (9a) der Lünette (2) einen Körper (5) umfasst, der eine Außenfläche (17) der Lünette (2) aufweist, die mit mindestens einem berührungsempfindlichen Bereich (18a, 18b) versehen ist.

6. Elektronische Uhr (1) nach einem der vorhergehenden Ansprüche, **dadurch gekennzeichnet, dass** der zweite Teil (9b) der Lünette (2) ein Trägerelement (25) umfasst, das eine obere Fläche (26) mit mindestens einem Vorsprung (27) aufweist, dessen Spitze (28) mit einem leitfähigen Material bedeckt ist, das eine Elektrode (22) bildet, wobei die genannte Spitze (28) einer Fläche des Inneren des Körpers (5) des ersten Teils (9a) der Lünette (2) gegenüberliegt, welche unterhalb eines ersten oder eines zweiten berührungsempfindlichen Bereichs (18a, 18b) einer Außenfläche (17) dieses ersten Teils (9a), die die Außenseite der Lünette (2) bildet, angeordnet ist.

7. Elektronische Uhr (1) nach einem der vorhergehenden Ansprüche, **dadurch gekennzeichnet, dass** der Antennenschaltkreis (10) auf einer oberen Fläche (26) eines Trägerelements (25) oder auf einer Innenfläche des Körpers (5) des ersten Teils (9a) der Lünette (2) ausgebildet ist.

8. Elektronische Uhr (1) nach einem der vorhergehenden Ansprüche, **dadurch gekennzeichnet, dass** die taktile Steuerschaltung (13), die mindestens eine Elektrode (22) umfasst, auf einem zweiten Abschnitt der oberen Fläche (26) eines Trägerelements (25) des zweiten Teils (9a) der Lünette (2) ausgebildet ist.

9. Elektronische Uhr (1) nach einem der vorhergehenden Ansprüche, **dadurch gekennzeichnet, dass** die Steuerschaltung (13) einen Mikrocontroller (12) umfasst, der über mindestens eine Leiterbahn (20) mit der genannten mindestens einen Elektrode (22) verbunden ist.

10. Elektronische Uhr (1) nach einem der vorhergehenden Ansprüche, **dadurch gekennzeichnet, dass** die Lünette (2) aus mindestens einem dielektrischen und/oder elektrisch nicht leitenden Material hergestellt ist.

11. Elektronische Uhr (1) nach einem der vorhergehenden Ansprüche, **dadurch gekennzeichnet, dass** es sich um eine Uhr (1) handelt, insbesondere um eine vernetzte Uhr, die eine Lünette (2) umfasst, die ganz oder teilweise eine berührungsempfindliche Oberfläche bildet.

## Claims

1. An electronic watch (1) comprising a case provided with a bezel (2) forming totally or partially a touch interface of said watch (1), said bezel (2) comprising an antenna circuit (10) of a communication module (6) of the watch (1) and a flange arranged between a crystal (29) and a dial (7) of the watch (1), the flange being provided with a touch control circuit (13) of a touch control organ (8) of this watch (1), said antenna circuit (10) and the touch control circuit (13) being located in the bezel (2) on either side of an axis of symmetry (B) passing through the centre (O) of the bezel (2), such antenna circuit (10) comprising first and second strands (19a, 19b) produced on a first portion of the upper surface (26) of a support element (25) of a second portion (9a) of the bezel (2), said first and second strands (19a, 19b) each having a proximal end and a distal end, and extending in parallel between their proximal and distal ends, the first and second strands (19a, 19b) being connected by their distal ends as well as at their proximal ends, this antenna circuit (10) comprising a microcircuit (11) connected to the first and second strands (19a, 19b) by means of a connection track (21) produced on the upper surface (26) of a support element (25) of a second portion (9a) of the bezel (2).

2. The electronic watch (1) according to the preceding claim, **characterised in that** the bezel (2) comprises first and second portions (9a, 9b) likely to be assembled with one another.

3. The electronic watch (1) according to any one of the preceding claims, **characterised in that** the bezel (2) comprises a first portion (9a) that is capable of enclosing a crystal (29) of the watch (1).

4. The electronic watch (1) according to any one of the preceding claims, **characterised in that** the bezel (2) comprises a second portion (9b) that is capable of enclosing a dial of the watch (1).

5. The electronic watch (1) according to any one of the preceding claims, **characterised in that** the first portion (9a) of the bezel (2) comprises a body (5) comprising an outer face (17) of the bezel (2) provided with at least one touch area (18a, 18b).

6. The electronic watch (1) according to any one of the preceding claims, **characterised in that** the second portion (9b) of the bezel (2) comprises a support element (25) provided with an upper surface (26) including at least one relief (27) the tip (28) of which is covered with a conductive material forming an electrode (22), said tip (28) being located facing a portion of an inner face of the body (5) of the first portion (9a) of the bezel (2) arranged below a first or of a second touch area (18a, 18b) of an outer face (17) of this first portion (9a) constituting an external face of the bezel (2).

7. The electronic watch (1) according to any one of the preceding claims, **characterised in that** the antenna circuit (10) is produced on an upper surface (26) of a support element (25) or on an inner face of the body (5) of the first portion (9a) of the bezel (2).

8. The electronic watch (1) according to any one of the preceding claims, **characterised in that** the touch control circuit (13) comprising at least one electrode (22) is produced on a second portion of the upper surface (26) of a support element (25) of a second portion (9a) of the bezel (2).

9. The electronic watch (1) according to any one of the preceding claims, **characterised in that** the control circuit (13) comprises a microcontroller (12) connected to said at least one electrode (22) by means of at least one connection track (20).

10. The electronic watch (1) according to any one of the preceding claims, **characterised in that** the bezel (2) is manufactured in at least one dielectric and/or electrically non-conductive material.

11. The electronic watch (1) according to any one of the preceding claims, **characterised in that** it is a watch (1) particularly a connected watch comprising a bezel (2) that is a bezel forming totally or partially a touch interface.
